# EUROPÄISCHE PATENTSCHRIFT

(11) **EP 1 574 774 B1**
(45) Veröffentlichungstag und Bekanntmachung des Hinweises auf die Patenterteilung: **27.06.2007**
(21) Anmeldenummer: 05003020.4
(22) Anmeldetag: 14.02.2005
(51) Int. Cl.: F16L 17/10, F16J 15/00

(54) **Dichtungsanordnung**
Sealing arrangement
Dispositif d'étanchéité

(30) Priorität: 25.02.2004 DE 102004009555
(43) Veröffentlichungstag der Anmeldung: 14.09.2005
(73) Patentinhaber: Atec Pharmatechnik Gmbh, 24966 Sörup (DE)
(72) Erfinder: Mumm, Hans-Werner, 24966 Sörup (DE)
(74) Vertreter: Thomas, Götz

(56) Entgegenhaltungen:
- WO-A-02/44605
- FR-A- 1 096 367
- US-A- 3 642 289
- US-B1- 6 183 268

## Beschreibung

Die Erfindung betrifft eine Dichtungsanordnung für lösbare Flanschverbindungen zwischen zwei Teilen, die einen Fluidkanal umschließen, wobei die beiden Teile Flansche mit gegenüberliegenden Stirnfläche aufweisen, und wobei einer der beiden Flansche mit einer umlaufenden Nut und einer in der Nut angeordneten ringförmigen Dichtung versehen ist, die durch Zufuhr von Druckfluid zwischen den Grund der Nut und die Dichtung gegen die Stirnfläche des anderen Flanschs anpressbar ist. Die Erfindung betrifft weiter eine Vorrichtung zur Behandlung von kleineren Gegenständen, insbesondere zur Reinigung und Sterilisation von Spritzenkolben oder Verschlüssen von Spritzen, Infusionsflaschen, Vials für pharmazeutische Zwecke, die mindestens eine lösbare Flanschverbindung mit einer solchen Dichtungsanordnung aufweist.

Dichtungsanordnungen der genannten Art sind in der Druckschrift WO 02/44605 A1 und in der am Anmeldetag der vorliegenden Patentanmeldung noch unveröffentlichten Deutschen Patentanmeldung 103 07 444.9 der Anmelderin beschrieben. Diese Dichtungsanordnung ist Teil einer Vorrichtung zur Reinigung, Sterilisation und ggf. Silikonisierung von Verschlüssen von pharmazeutischen Verpackungsbehältern, die dazu in einen schwenkbar aufgehängten Behandlungs- und Transportbehälter eingebracht werden, wo sie mit heißem Wasser oder einem Wasser-Luft-Gemisch gespült und nach dem Abführen des Spülmediums mit Heißdampf sterilisiert werden. Zum Abführen des Spülmediums ist der Behälter mit einem verschließbaren Austrittsanschluss mit einem Anschlussflansch versehen, der in einer aufrechten Schwenkstellung des Behälters lösbar mit einem Anschlussflansch eines Entleerungsanschlusses der Vorrichtung verbindbar ist, wozu eine Dichtungsanordnung der eingangs beschriebenen Art mit einem mit Druckluft beaufschlagbaren Dichtring verwendet wird. Entsprechende Dichtungsanordnungen sind bei der genannte Reinigungs- und Sterilisiervorrichtung auch an den Flanschverbindungen zwischen einer Zufuhr- bzw. Abfuhrleitung für die Behandlungsmedien und den mit diesen Leitungen verbindbaren Behälteröffnungen vorgesehen.

Grundsätzlich können derartige Dichtungsanordnungen jedoch mit Vorteil an allen Arten von Flanschverbindung eingesetzt werden, die häufiger gelöst werden müssen.

Bei pharmazeutischen Anwendungen, wo die Sterilität des durch den Fluidkanal transportierten Fluids unter allen Umständen gewährleistet bleiben muss, können mit der eingangs genannten Dichtungsanordnung jedoch ggf. Probleme auftreten, wenn es zwischen der Innenseite der Dichtung und der benachbarten Seitenwand der Nut zu einer Undichtigkeit kommt und der Druck im Fluidkanal unter dem Druck des Druckfluids liegt. In diesem Fall kann unsteriles Druckfluid aus dem Bereich des Nutgrundes an der Dichtung vorbei ins Innere des Fluidkanals gelangen und zu einer Kontamination des darin transportierten Fluids führen.

Ausgehend hiervon liegt der Erfindung die Aufgabe zugrunde, eine Dichtungsanordnung der eingangs genannten Art dahingehend zu verbessern, dass ein Eindringen von Druckfluid in den Fluidkanal sicher verhindert werden kann.

Diese Aufgabe wird erfindungsgemäß dadurch gelöst, dass die Dichtung an ihrer dem Fluidkanal zugewandten Innenseite zusammen mit der benachbarten Seitenwand der Nut eine umlaufende Ausnehmung begrenzt, in die mindestens ein Kanal zum Abführen von an der Innenseite der Dichtung vorbei in die Ausnehmung entweichendem Druckfluid mündet.

Der Erfindung liegt der Gedanke zugrunde, den Druck des infolge einer Undichtigkeit zwischen der Innenseite der Dichtung und der benachbarten inneren Seitenwand der Nut hindurchtretenden Druckfluids vor dem Erreichen des Fluidkanals zu entlasten, indem über die umlaufende Ausnehmung und den Kanal zum Beispiel eine Verbindung mit der Umgebung geschaffen wird, in welche das entweichende Druckfluid abgeführt und so sein Eindringen in den Fluidkanal sicher verhindert wird. Das verwendete Druckfluid wird vorzugsweise Druckluft oder ein anderes Gas sein, jedoch könnte grundsätzlich auch Druckdampf oder ein inkompressibles Fluid, wie Wasser, verwendet werden.

Eine bevorzugte Ausgestaltung der Erfindung sieht vor, dass die Dichtung aus einem gummielastischen Material besteht und beiderseits der Ausnehmung eine Dicke aufweist, die etwas größer ist als die lichte Weite der Nut. Die Dichtung muss daher beim Einführen in die Nut etwas zusammengedrückt werden und liegt anschließend beiderseits der Ausnehmung dichtend gegen die gegenüberliegenden Seitenwände der Nut an, so dass vor dem Auftreten einer Undichtigkeit weder im Bereich des Nutgrundes in die Nut zugeführtes Druckfluid noch Fluid aus dem Fluidkanal in die Ausnehmung gelangen kann.

Um einerseits eine Beschädigung der gummielastischen Dichtung beim Herstellen oder Lösen der Flanschverbindung zu verhindern und andererseits für eine ausreichende Anpresskraft der Dichtung zu sorgen, sieht eine weitere bevorzugte Ausgestaltung der Erfindung vor, dass die Dichtung innerhalb der Nut zwischen zwei Stellungen verschiebbar ist, und zwar zwischen einer Ausgangsstellung, in der sie sich vollständig innerhalb der Nut befindet, und einer Dichtstellung, in der das vom Nutgrund abgewandte Stirnende der Dichtung aus der Nut übersteht und die Dichtung vom Druckfluid gegen die gegenüberliegende Stirnfläche des anderen Flanschs angepresst wird.

Da sich die zusammengedrückte und dichtend gegen die Seitenwände der Nut anliegende Dichtung jedoch nicht ohne Widerstand in der Nut verschieben lässt, wird sie zweckmäßig zwischen diesen Stellungen hin und her bewegt, indem im Bereich des Nutgrundes Druckluft zugeführt oder ein Unterdruck angelegt wird. Weiter kann das Verschieben der Dichtung in der Nut erleichtert werden, indem man ein geeignetes Gleitmittel, wie zum Beispiel ein Silikonöl, auf die Oberfläche der Dichtung aufbringt.

In der Regel wird es ausreichend sein, den Kanal zu einer äußeren Oberfläche des Flanschs zu führen, wo er in die Umgebung mündet, in welche somit zwischen der Innenseite der Dichtung und der inneren Seitenwand der Nut entweichendes Druckfluid und ggf. auch über diesen Weg entweichendes Fluid aus dem Fluidkanal ausströmen kann. Jedoch kann alternativ auch vorgesehen werden, den Kanal mit einem Druckwächter zu verbinden, der einen leckagebedingten Druckanstieg im Kanal erfasst und ein Signal ausgibt, das dem Bedienungspersonal eine Undichtigkeit der Dichtung und die Notwendigkeit eines Austauschs derselben anzeigt. Wenn das im Fluidkanal transportierte Fluid unter einem Unterdruck steht, kann darüber hinaus vorgesehen werden, den Kanal mit einer Unterdruckquelle zu verbinden, vorzugsweise derjenigen, die auch zur Beaufschlagung der Nut mit Unterdruck dient.

Während es grundsätzlich möglich ist, dass die Ausnehmung allein von einer ringförmigen Einbuchtung in der Innenseite der Dichtung oder allein von einem aus der gegenüberliegenden Seitenwand der Nut herausgearbeiteten Einstich gebildet wird, sieht eine weitere bevorzugte Ausgestaltung der Erfindung vor, dass die Ausnehmung sowohl einen umlaufenden Einstich in der Seitenwand der Nut und eine dem Einstich gegenüberliegende umlaufende Einbuchtung in der Dichtung umfasst. Dadurch kann zum einen der Kanal in den Einstich münden und so ein Verstopfen des Kanals durch Abrieb der Dichtung vermieden werden. Zum anderen wird verhindert, dass sich die Innenseite der Dichtung während ihrer Bewegung aus der Ausgangsstellung in die Dichtstellung, oder umgekehrt, an den Rändern des Einstichs reibt und beschädigt wird. Zu diesem Zweck ist die Breite der Einbuchtung in Richtung der Verschiebebewegung vorzugsweise auch größer als die Breite des Einstichs, oder umgekehrt.

Gemäß einer weiteren bevorzugten Ausgestaltung der Erfindung ist die Nut in Richtung der Stirnflächen der beiden Flansche zur Längsachse des Fluidkanals hin geneigt, um zum einen das in der Dichtstellung über die Nut überstehende Stirnende der Dichtung so weit wie möglich an die Innenwand des Fluidkanals anzunähern und dadurch im Spalt zwischen den Stirnflächen Toträume zwischen der Innenwand des Fluidkanals und der Dichtung weitestgehend zu verkleinern, und um zum anderen bei Flanschen mit zylindrischen Fluidkanälen zwischen der inneren Umfangswand der letzteren und der Nut das Platzangebot zur Unterbringung des Einstichs sowie des mindestens einen in den Einstich mündenden Kanals zu verbessern.

Im folgenden wird die Erfindung anhand eines in der Zeichnung dargestellten Ausführungsbeispiels näher erläutert. Es zeigen:
Fig. 1: eine Schnittansicht einer lösbaren Flanschverbindung zwischen einem Behälter und einer Rohrleitung;
Fig. 2: eine Schnittansicht entlang der Linie II-II der Fig. 1, jedoch nach dem Lösen der Flanschverbindung und dem Entfernen der Rohrleitung;
Fig. 3: eine Draufsicht auf einen behälterseitigen Flansch der Flanschverbindung;
Fig. 4: eine vergrößerte Detailansicht des Ausschnitts IV aus Fig. 1;
Fig. 5: eine Ansicht entsprechend Fig. 4, jedoch nach dem Lösen der Flanschverbindung und dem Entfernen der Rohrleitung;
Fig. 6: eine Ansicht ähnlich Fig. 5, jedoch bei einer modifizierten Flanschverbindung;
Fig. 7: eine teilweise geschnittene schematische Seitenansicht einer Vorrichtung zur Reinigung und Sterilisation von pharmazeutischen Verschlüssen mit mehreren lösbaren Flanschverbindungen zwischen der Vorrichtung und einem abnehmbaren und verschwenkbaren Behandlungs- und Transportbehälter.

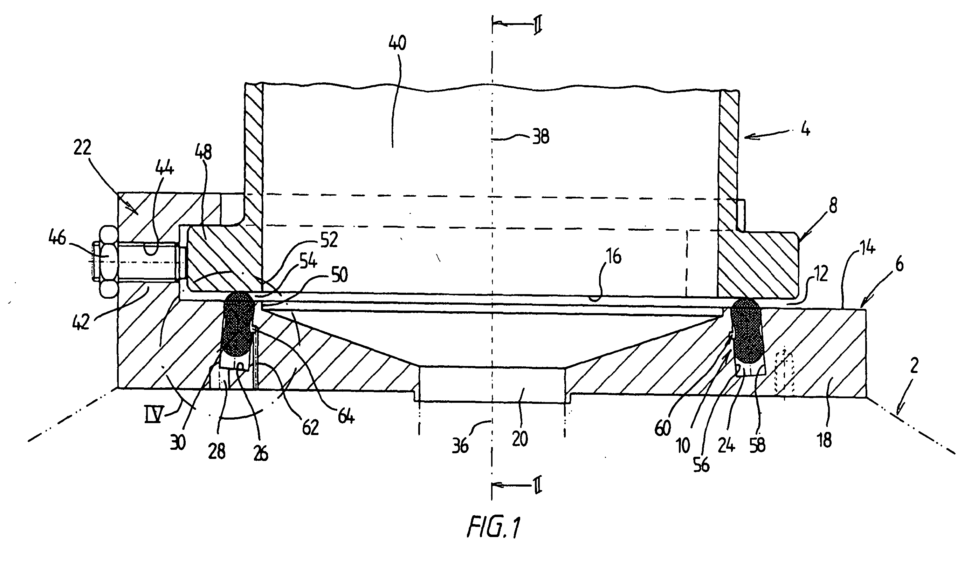

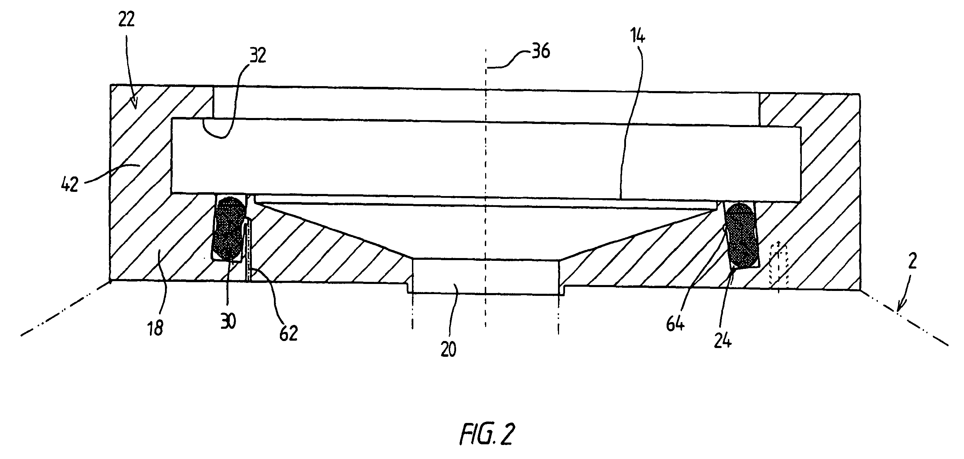

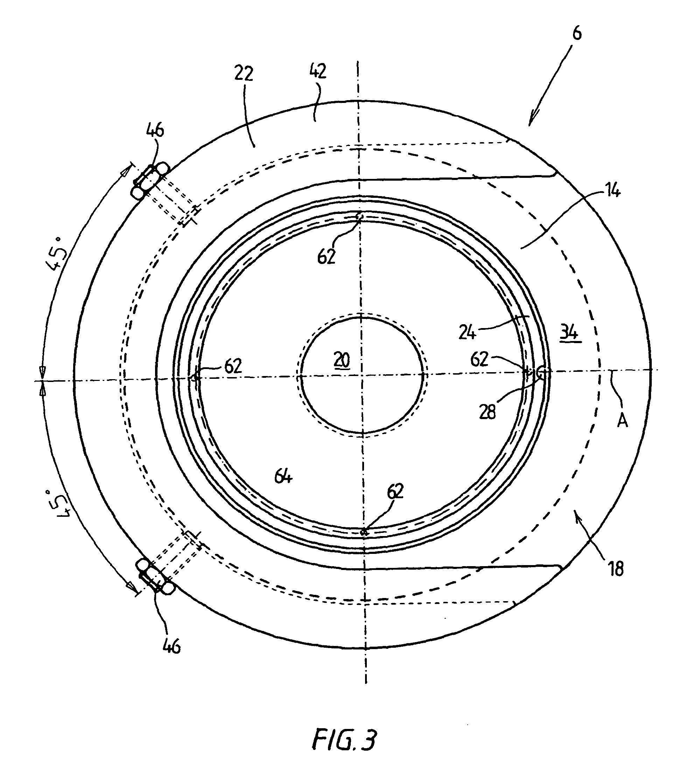

Die in den Figuren 1 bis 5 der Zeichnung dargestellte lösbare Flanschverbindung zwischen einem Behälter 2 (in den Figuren 1 und 2 in zweistrichpunktierten Linien angedeutet) und einer Rohrleitung 4 besteht im Wesentlichen aus zwei Flanschen 6 und 8 sowie einer Dichtungsanordnung 10 zur gas- und flüssigkeitsdichten Abdichtung eines Ringspalts 12 zwischen einer vom Behälter 2 abgewandten radialen Stirnfläche 14 des Behälterflanschs 6 und einer der Stirnfläche 14 in geringem Abstand gegenüberliegenden radialen Stirnfläche 16 des Rohrleitungsflanschs 8.

Der Behälterflansch 6 besteht im Wesentlichen aus einem mit dem Behälter 2 verschweißten runden plattenförmigen Flanschteil 18, einer den Flanschteil 18 durchsetzenden Durchtrittsöffnung 20 für ein aus der Rohrleitung 4 in den Behälter 2 oder aus dem Behälter 2 in die Rohrleitung 4 gefördertes Fluid, wie zum Beispiel heißes Spülwasser, Wasserdampf oder ein Wasser-LuftGemisch, die an ihrem erweiterten äußeren Ende von der Stirnfläche 14 umgeben ist, einem einstückig mit dem Flanschteil 18 verbundenen Haltevorsprung 22 für den Rohrleitungsflansch 8, sowie einer um das äußere Ende der Durchtrittsöffnung 20 umlaufenden und in die Stirnfläche 14 mündenden Nut 24, die im Bereich ihres Nutgrundes 26 über eine Druckluftbohrung 28 mit einer Druckluftquelle (nicht dargestellt) verbindbar ist, um einen in die Nut 24 eingesetzten gummielastischen Dichtring 30 der Dichtungsanordnung 10 gegen die Stirnfläche 16 anzupressen.

Wie am besten in den Figuren 1, 2 und 3 dargestellt, erstreckt sich der über die Stirnfläche 14 überstehende und mit einer Hinterschneidung 32 versehene Haltevorsprung 22 nur über einen Teil des Umfangs des Flanschteils 18, so dass sich zur Herstellung der Flanschverbindung der Rohrleitungsflansch 8 an der offenen Seite 34 des Haltevorsprungs 22 einführen und in Bezug zum Behälterflansch 6 radial verschieben lässt, bis die Längsachsen 36, 38 der Durchtrittsöffnung 20 und des von der Rohrleitung 4 umschlossenen Fluidkanals 40 miteinander fluchten (Fig. 1). Um eine exakte Fluchtung sicherzustellen, weist der Haltevorsprung 22 in seinem axialen Fußteil 42 zwei im Winkelabstand von 45 Grad beiderseits der Einführachse A angeordnete radiale Gewindebohrungen 44 auf, in die jeweils von außen her eine nach innen überstehende Justierschraube 46 eingeschraubt ist. Nach dem Herstellen der Flanschverbindung hintergreift der Haltevorsprung 22 einen radial überstehenden Flanschteil 48 des Rohrleitungsflanschs 8 und liegt mit seiner Hinterschneidung 32 flächig gegen dessen Rückseite an, so dass der Flansch 8 beim Anpressen des Dichtrings 30 gegen seine Stirnfläche 16 nicht in axialer Richtung ausweichen kann.

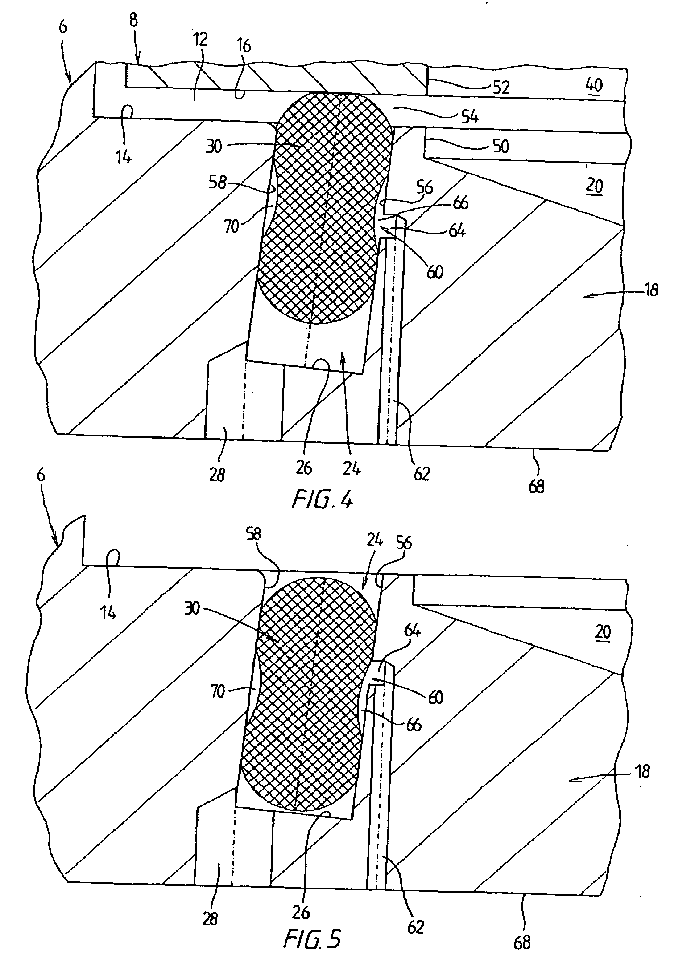

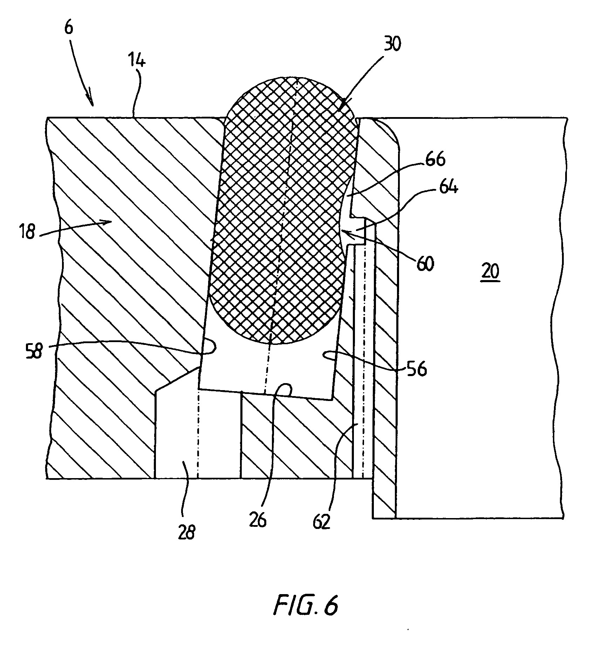

Wie am besten in Fig. 2 und 5 dargestellt, entspricht die Tiefe der Nut 24 im Wesentlichen der Breite oder Längserstreckung des Dichtrings 30, so dass dieser in seiner in Fig. 2 und 5 dargestellten Ausgangsstellung bei gelöster Flanschverbindung mit seinem unteren Stirnende gegen den Nutgrund 26 anliegt, während sein oberes Stirnende nicht aus der Nut 24 übersteht, so dass es während des Einführens des Rohrleitungsflanschs 8 in den Haltevorsprung 22 beim Herstellen der Flanschverbindung nicht beschädigt werden kann. Nach der Herstellung der Flanschverbindung kann Druckluft aus der Druckluftquelle durch die Druckluftbohrung 28 in die Nut 24, genauer zwischen den Nutgrund 26 und das untere Stirnende des Dichtrings 30 zugeführt werden, um diesen in eine in den Figuren 1 und 4 dargestellte Dichtstellung zu verschieben, in der sein oberes Stirnende aus der Nut 24 übersteht, gegen die Stirnfläche 16 des Rohrleitungsflanschs 8 angepresst wird und den Ringspalt 12 zwischen den Stirnflächen 14, 16 radial nach außen zu gas- und flüssigkeitsdicht verschließt.

Die Nut 24 ist unter einem spitzen Winkel in Bezug zur Längsachse 36 der Durchtrittsöffnung 20 geneigt, um einen nach der Herstellung der Flanschverbindung zwischen dem in den Ringspalt 12 überstehenden oberen Stirnende des Dichtrings 30 und den an den Ringspalt 12 angrenzenden fluchtenden Innenwandbereichen 50, 52 der Durchtrittsöffnung 20 und Fluidkanals 40 gebildete Totraum 54 so klein wie möglich zu halten.

Um zu verhindern, dass ein Teil der aus der Druckluftquelle in die Nut 24 zugeführten Druckluft in der Dichtstellung zwischen einer der Durchtrittsöffnung 20 zugewandten Innenseite des Dichtrings 30 und einer dazu benachbarten inneren Seitenwand 56 der Nut 24 hindurch aus der Nut 24 entweicht und in den Fluidkanal 40 gelangt, weist der Dichtring 30 etwas größere Querschnittsabmessungen als die Nut 24 auf, so dass er zum Einführen in dieselbe etwas zusammengedrückt werden muss und nach dem Einführen dichtend gegen die beiden gegenüberliegenden Seitenwände 56, 58 der Nut 24 anliegt.

Insbesondere bei pharmazeutischen Anwendungen, wo die Sterilität im Inneren des Fluidkanals 20, 40 unter allen Umständen gewährleistet bleiben muss, reicht dies jedoch nicht aus, weil es infolge der wiederholten Bewegung des Dichtrings 30 zwischen seiner Ausgangsstellung und seiner Dichtstellung mit der Zeit zu einem Verschleiß an den gegen die Seitenwände 56, 58 anliegenden Oberflächenbereichen des Dichtrings 30 und dadurch ggf. zu einer Undichtigkeiten in diesen Bereichen kommen kann. Während eine Undichtigkeit zwischen der äußeren Seitenwand 58 der Nut 24 und der gegenüberliegenden Außenseite des Dichtrings 30 nur zu einem unproblematischen Einströmen von Druckluft in den äußeren Teil des Ringspalts 12 führen würde, würde eine Undichtigkeit zwischen der inneren Seitenwand 56 der Nut 24 und der gegenüberliegenden Innenseite des Dichtrings 30 bei einem entsprechenden Druckgefälle zu einem unerwünschten Eintritt von Druckluft in den Fluidkanal 20, 40 führen.

Aus diesem Grund umfasst die Dichtungsanordnung 10 zwischen der zwischen der inneren Seitenwand 56 der Nut 24 und der gegenüberliegenden Innenseite des Dichtrings 30 eine umlaufende Ausnehmung 60, die durch insgesamt vier Entlüftungsbohrungen 62 mit der Umgebung verbunden ist. Wegen der Entlüftungsbohrungen 62 herrscht in der Ausnehmung 60 stets Umgebungsdruck, so dass sich im Falle der zuvor beschriebenen Undichtigkeiten der Druck der Druckluft zwischen dem Nutgrund 26 und dem Dichtring 30 bzw. umgekehrt der Druck eines im Fluidkanal 40 transportierten Fluids nicht über die Ausnehmung hinaus fortpflanzen kann. Damit bleibt jeweils hinter der Ausnehmung 60 die Dichtigkeit gewährleistet, während die entweichende Druckluft bzw. das entweichende Fluid durch die Entlüftungsbohrungen 62 in die Umgebung abgeführt wird. Alternativ können die Bohrungen 62 mit einem Druckwächter oder einer Unterdruckquelle (beide nicht dargestellt) verbunden werden, um entweichende Druckluft zum Druckwächter bzw. in die Unterdruckquelle abzuführen.

Wie am besten in den Figuren 4 und 5 dargestellt, wird die Ausnehmung 60 von einem radial in die innere Seitenwand 56 der Nut 24 eingebrachten umlaufenden Einstich 64 und einer umlaufenden konkav gewölbten Einbuchtung 66 in der Innenseite des Dichtrings 30 gebildet, deren Breite größer als die Breite des Einstichs 64 ist, so dass die Einbuchtung 66 dem Einstich 64 sowohl in der Ausgangsstellung und in der Dichtstellung des Dichtrings 30 offen gegenüberliegt.

Die Entlüftungsbohrungen 62 münden in gleichen Winkelabständen in den Einstich 64 und erstrecken sich von dort aus in axialer Richtung durch den Flanschteil 18 hindurch bis zu dessen dem Behälter 2 zugewandter Stirnfläche 68, wo sie in nach außen führende radiale Entlüftungskanäle (nicht dargestellt) münden.

Die Druckluftbohrung 28 mündet in der Nähe der äußeren Seitenwand 58 der Nut 24 in den Nutgrund, so dass die Druckluft zwischen dem ebenen Nutgrund 26 und der Seitenwand 58 einerseits und dem gerundeten unteren Stirnende des Dichtrings 30 ungehindert in die Nut 24 einströmen kann.

Während der in den Figuren 1 bis 4 dargestellten Dichtring 30 zur Vergleichmäßigung des Reibungswiderstandes während seiner Bewegung in die Dicht- bzw. Ausgangsstellung durch Zufuhr von Druckluft in die Bohrung 28 bzw. durch Anlegen eines Unterdrucks an der Bohrung 28 im Querschnitt symmetrisch ausgebildet und auch auf seiner Außenseite mit einer umlaufenden konkav gewölbten Einbuchtung 70 versehen ist, weist der Dichtring 30 der in Fig. 6 dargestellten Dichtungsanordnung 10 nur an seiner Innenseite eine solche Einbuchtung 66 auf.

Aus Fig. 6 ist weiter ersichtlich, dass durch die Neigung der Nut 24 in Bezug zur Längsachse 36 der Durchtrittsöffnung 20 nicht nur der Totraum 54 verkleinert werden kann, sondern darüber hinaus bei einer zylindrischen Durchtrittsöffnung 20 zwischen deren Innenwand und der inneren Seitenwand 56 der Nut 24 das Platzangebot für die Herstellung der Entlüftungsbohrungen 62 größer ist.

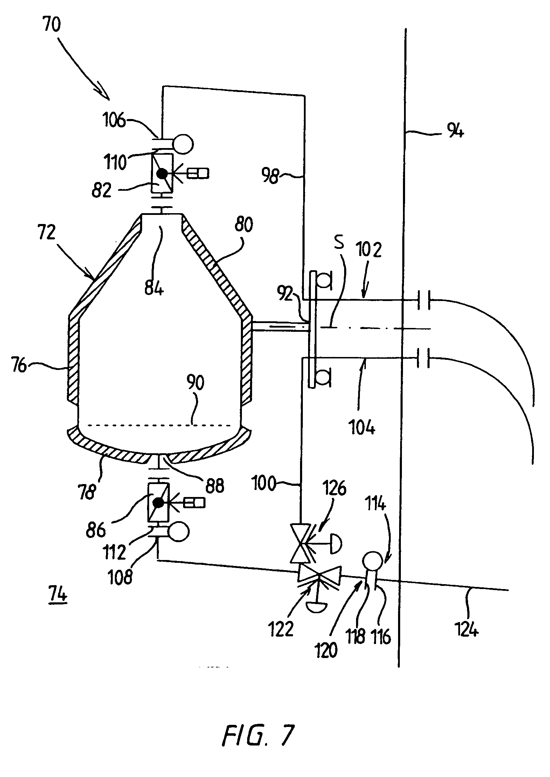

Die in Fig. 7 dargestellte Vorrichtung 70 dient zur Reinigung, Sterilisation und ggf. zur Silikonisierung von Verschlüssen für pharmazeutische Verpackungsbehälter, die zu ihrer Behandlung in einen Behandlungs- und Transportbehälter 72 eingebracht und mit Hilfe der Vorrichtung 70 im Behälter 72 gereinigt, sterilisiert und ggf. silikonisiert werden, bevor sie im Behälter 72 zu einer Übergabestation (nicht dargestellt) einer Verpackungsmaschine transportiert werden, um sie dort nach einem Ankoppeln des Behälters 72 in sterilem Zustand zu entnehmen und mittels der Verpackungsmaschine einzeln auf den zuvor gefüllten pharmazeutischen Verpackungsbehältern anzubringen.

Wegen der hohen Anforderungen an die Reinheit erfolgen sowohl die Behandlung der Verschlüsse mittels der Reinigungs- und Sterilisationsvorrichtung 70 sowie der Transport des Behälters 72 mit den gereinigten und sterilisierten Verschlüssen und das Ankoppeln an die Übergabestation innerhalb eines Reinraums 74.

Der Behandlungs- und Transportbehälter 72 weist in seiner aufrechten Stellung ein im Wesentlichen zylindrisches Unterteil 76 mit einem konvex nach unten gewölbten Boden 78 und ein nach oben zu konisch verjüngtes Oberteil 80 auf. Am oberen Ende des Behälters 72 befindet sich eine durch ein Klappenventil 82 verschließbare Öffnung 84 mit größerem Öffnungsquerschnitt, durch welche die zu reinigenden und zu sterilisierenden Verschlüsse bei aufrechtem Behälter 72 in diesen eingefüllt werden und durch welche die gereinigten und sterilisierten Verschlüsse durch ihre Schwerkraft aus dem um 180 Grad gedreht an die Übergabestation angekoppelten umgekehrten Behälter 72 in die Übergabestation fallen. Am tiefsten Punkt des Bodens 78 befindet sich eine weitere, durch ein Klappenventil 86 verschließbare Öffnung 88, durch die ebenso wie durch die Öffnung 84 Heißwasser, Kaltwasser, ein Wasser-Luft-Gemisch, Trocknungsluft, Dampf oder andere flüssige oder gasförmige Behandlungsmedien in den Behälter 72 zugeführt oder aus diesem abgeführt werden können. Im Inneren ist der Behälter 72 in einem geringen Abstand über dem Boden 78 mit einem siebförmigen Zwischenboden 90 versehen, der bei der Behandlung einen Hindurchtritt des Behandlungsmediums gestattet und bei aufrechtem Behälter 72 ein Abtropfen der Gegenstände erlaubt.

Die Reinigungs- und Sterilisationsvorrichtung 70 besteht im Wesentlichen aus einem in den Reinraum 74 überstehenden Tragelement 92 zur lösbaren Aufhängung eines Behälters 72 und einem durch eine Trennwand 94 vom Reinraum 74 getrennten Maschinenteil (nicht dargestellt).

Neben dem motorisch um eine horizontale Schwenkachse S schwenkbaren Tragelement 92 für den Behälter 72 umfasst de Vorrichtung 70 zwei in den Reinraum 74 überstehende Leitungsabschnitte 98, 100 einer Zufuhr- bzw. Abfuhrleitung 102, 104, durch die ein Behandlungsmedium wahlweise in den Behälter 72 zugeführt bzw. das aus dem Behälter 72 verdrängte Medium abgeführt werden kann. Jeder der beiden Leitungsabschnitte 98, 100 weist ein freies Ende mit einem Anschlussflansch 106, 108 auf, von denen sich nach der Befestigung des Behälters 72 am Tragelement 92 der eine mit einem komplementären Flansch 110 des Ventils 82 an der oberen Behälteröffnung 84 und der andere mit einem komplementären Flansch 112 des Ventils 86 an der unteren Behälteröffnung 88 flüssigkeits- und gasdicht verbinden lässt. Die beiden Leitungsabschnitte 98, 100 laufen im Bereich des schwenkbaren Tragelements 92 zusammen und sind durch das Tragelement 92 hindurch in den Maschinenteil der Vorrichtung 70 geführt, wobei sie zusammen mit dem Tragelement 92 um dessen Schwenkachse S verschwenkbar sind.

Die Vorrichtung 70 umfasst im Reinraum darüber hinaus noch einen Entleerungsanschluss 114, der unterhalb des Tragelements 92 in der Trennwand 94 angeordnet ist und einen in den Reinraum 6 mündenden Anschlussflansch 116 aufweist. Der Anschluss 114 dient zur Restentleerung des Behälters 72 in dessen aufrechter Entleerungsstellung, in der sich der Anschlussflansch 116 flüssigkeits- und gasdicht mit einem komplementären Anschlussflansch 118 eines Austrittsanschlusses 120 in dem zur unteren Behälteröffnung 88 führenden Leitungsabschnitt 100 verbinden lässt. Der Entleerungsanschluss 114 liegt tiefer als die untere Behälteröffnung 88, so dass im Behälter 72 befindliches flüssiges Behandlungsmedium durch Schwerkraft vollständig in den Entleerungsanschluss 114 abläuft, wenn die beiden Anschlussflansche 116, 118 in der Entleerungsstellung des Behälters 27 miteinander verbunden und das Ventil 86 sowie ein vor dem Austrittsanschluss 120 angeordnetes erstes Wegeventil 122 geöffnet ist. Durch Öffnen eines zweiten Wegeventils 126 im vertikalen Teilstück des Leitungsabschnitts 100 kann in diesem Teilstück zurückgebliebenes flüssiges Behandlungsmedium ebenfalls durch den Entleerungsanschluss 114 in eine in den Maschinenteil führende und hinter der Trennwand 94 durch ein Ventil verschließbare Rohrleitung 124 abgeführt werden.

Zur Herstellung von flüssigkeits- und gasdichten Flanschverbindungen mit integrierter Sterilsperre zwischen den Flanschen 106, 110 bzw. 108, 112 und 116, 118 sind diese jeweils mit einer Dichtungsanordnung 10 versehen, wie in den Figuren 1 bis 5 bzw. 6 dargestellt, wobei jedoch die mit Druckluft beaufschlagbare Nut 24 jeweils im Flansch 106, 108 bzw. 116 der Vorrichtung 70 angeordnet ist, und nicht im behälterseitigen Flansch 110, 112 bzw. 118, wie zuvor unter Bezugnahme auf die Figuren 1 bis 6 beschrieben.

Bei dem Flansch 116 des Entleerungsanschlusses 114 erstreckt sich der Vorsprung 22 des Flanschs 116 zudem nur über zwei diametral gegenüberliegende Bereiche an dessen Ober- und Unterseite, so dass der Anschlussflansch 118 des Austrittsanschlusses 120 zusammen mit dem Behälter 72 und den Leitungsabschnitten 98, 100 um die Schwenkachse S des Tragelements 92 in Bezug zum Flansch 116 verschwenkbar ist.

## Patentansprüche

1. Dichtungsanordnung für lösbare Flanschverbindungen zwischen zwei Teilen, die einen Fluidkanal umschließen, wobei die beiden Teile Flansche mit gegenüberliegenden stirnflächen aufweisen, und wobei einer der beiden Flansche mit einer umlaufenden Nut und einer in der Nut angeordneten ringförmigen Dichtung versehen ist, die durch Zufuhr von Druckfluid zwischen den Grund der Nut und die Dichtung gegen die Stirnfläche des anderen Flanschs anpressbar ist, **dadurch gekennzeichnet, dass** die Dichtung (30) an ihrer dem Fluidkanal (20, 40) zugewandten Innenseite zusammen mit der benachbarten Seitenwand (56) der Nut (24) eine umlaufende Ausnehmung (60) begrenzt, in die mindestens ein Druckentlastungskanal (62) zum Abführen von an der Innenseite der Dichtung (30) vorbei in die Ausnehmung (60) entweichendem Druckfluid mündet.

2. Dichtungsanordnung nach Anspruch 1, **dadurch gekennzeichnet, dass** die Dichtung (30) beiderseits der Ausnehmung (60) dichtend gegen die gegenüberliegenden Seitenwände (56, 58) der Nut (24) anliegt.

3. Dichtungsanordnung nach Anspruch 1 oder 2, **dadurch gekennzeichnet, dass** die Dichtung (30) innerhalb der Nut (24) zwischen zwei Stellungen verschiebbar ist, einer Dichtstellung, in der ihr der Stirnfläche (16) des anderen Flanschs (8) zugewandtes Stirnende aus der Nut (24) überstehend gegen die Stirnfläche (16) angepresst wird, und einer Ausgangsstellung, in der sie sich vollständig innerhalb der Nut (24) befindet.

4. Dichtungsanordnung nach Anspruch 3, **dadurch gekennzeichnet, dass** die Dichtung (30) durch die Zufuhr von Druckfluid zwischen den Nutgrund (26) und die Dichtung (30) aus der Ausgangsstellung in die Dichtstellung bewegbar ist und durch Anlegen eines Unterdrucks zwischen dem Nutgrund (26) und der Dichtung (30) aus der Dichtstellung in die Ausgangsstellung bewegbar ist.

5. Dichtungsanordnung nach einem der vorangehenden Ansprüche, **dadurch gekennzeichnet, dass** die Dichtung (30) im Bereich der Ausnehmung (60) einen geringeren Querschnitt aufweist als beiderseits der Ausnehmung (60).

6. Dichtungsanordnung nach einem der vorangehenden Ansprüche, **dadurch gekennzeichnet, dass** die Dichtung (30) mindestens an ihrer Innenseite mit einer umlaufenden Einbuchtung (66) versehen ist.

7. Dichtungsanordnung nach Anspruch 6, **dadurch gekennzeichnet, dass** die Dichtung (30) auch an ihrer Außenseite mit einer umlaufenden Einbuchtung (70) versehen ist.

8. Dichtungsanordnung nach einem der vorangehenden Ansprüche, **dadurch gekennzeichnet, dass** die zur Innenseite der Dichtung benachbarte Seitenwand der Nut mit einem umlaufenden Einstich (64) versehen ist.

9. Dichtungsanordnung nach Anspruch 8, **dadurch gekennzeichnet, dass** der mindestens eine Druckentlastungskanal (62) in den Einstich (64) mündet.

10. Dichtungsanordnung nach Anspruch 8 oder 9, **dadurch gekennzeichnet, dass** die Einbuchtung (66) und der Einstich (64) zusammen die Ausnehmung (60) bilden.

11. Dichtungsanordnung nach einem der Ansprüche 8 bis 10, **dadurch gekennzeichnet, dass** die Breite der Einbuchtung (66) etwa um den Verschiebeweg der Dichtung (30) zwischen der Dichtstellung und der Ausgangsstellung größer als die Breite des Einstichs (64) ist.

12. Dichtungsanordnung nach einem der vorangehenden Ansprüche, **dadurch gekennzeichnet, dass** die Nut (24) in Richtung der Stirnflächen (14, 16) der Flansche (6, 8) auf eine Längsachse (36, 38) des Fluidkanals (20, 40) zu geneigt ist.

13. Dichtungsanordnung nach einem der vorangehenden Ansprüche, **dadurch gekennzeichnet, dass** die Dichtung (30) aus einem gummielastischen Material besteht.

14. Dichtungsanordnung nach einem der vorangehenden Ansprüche, **dadurch gekennzeichnet, dass** der mindestens eine Druckentlastungskanal mit einem Druckwächter verbunden ist.

15. Dichtungsanordnung nach einem der vorangehenden Ansprüche, **dadurch gekennzeichnet, dass** der mindestens eine Druckentlastungskanal mit einer Unterdruckquelle verbunden ist.

16. Vorrichtung zur Behandlung von kleineren Gegenständen, insbesondere zur Reinigung und Sterilisation von Spritzenkolben oder Verschlüssen von Spritzen, Infusionsflaschen, Vials für pharmazeutische Zwecke, mit einem Behälter zur Aufnahme einer Mehrzahl der Gegenstände, der mindestens eine Öffnung aufweist, sowie mit mindestens einer Zufuhr- oder Abfuhrleitung für ein Behandlungsmedium, **dadurch gekennzeichnet, dass** eine lösbare Flanschverbindung (106, 110; 108, 112; 118, 116) zwischen der Behälteröffnung (84, 88) und der Zufuhr- oder Abfuhrleitung (98; 100; 124) eine Dichtungsanordnung (10) nach einem der vorangehenden Ansprüche umfasst.

17. Vorrichtung nach Anspruch 16, **dadurch gekennzeichnet, dass** die mit Druckfluid beaufschlagbare Nut (24) im Flansch (106; 108; 118) der Zufuhr- oder Abfuhrleitung (98; 100; 124) angeordnet ist.

## Claims

1. Sealing arrangement for detachable flange connections between two parts which enclose a fluid duct, with the two parts having flanges with opposing end faces, and with one of the two flanges being provided with an encircling groove and an annular seal which is arranged in the groove, which seal can be pressed against the end face of the other flange by means of a supply of pressure fluid between the groove base and the seal, **characterized in that** the seal (30), at its inner side which faces toward the fluid duct (20, 40), and together with the adjacent side wall (56) of the groove (24), delimits an encircling clearance (60) into which at least one pressure relief duct (62) for discharging pressure fluid, which leaks past the inner side of the seal (30) into the clearance (60), opens out.

2. Sealing arrangement according to Claim 1, **characterized in that** the seal (30) sealingly bears, at both sides of the clearance (60), against the opposite side walls (56, 58) of the groove (24).

3. Sealing arrangement according to Claim 1 or 2, **characterized in that** the seal (30) is moveable within the groove (24) between two positions: a sealing position, in which that end side of said seal (30) which faces toward the end face (16) of the other flange (8) is pressed, so as to protrude from the groove (24), against the end face (16), and an initial position, in which said seal (30) is situated entirely within the groove (24).

4. Sealing arrangement according to Claim 3, **characterized in that** the seal (30) can be moved from the initial position into the sealing position by means of a supply of pressure fluid between the groove base (26) and the seal (30), and from the sealing position into the initial position by applying a vacuum between the groove base (26) and the seal (30).

5. Sealing arrangement according to one of the preceding claims, **characterized in that** the seal (30) has a smaller cross section in the region of the clearance (60) than at both sides of the clearance (60).

6. Sealing arrangement according to one of the preceding claims, **characterized in that** the seal (30) is provided at least at its inner side with an encircling indentation (66).

7. Sealing arrangement according to Claim 6, **characterized in that** the seal (30) is also provided at its outer side with an encircling indentation (70).

8. Sealing arrangement according to one of the preceding claims, **characterized in that** that side wall of the groove which is adjacent to the inner side of the seal is provided with an encircling recess (64).

9. Sealing arrangement according to Claim 8, **characterized in that** the at least one pressure relief duct (62) opens out into the recess (64).

10. Sealing arrangement according to Claim 8 or 9, **characterized in that** the indentation (66) and the recess (64) together form the clearance (60).

11. Sealing arrangement according to one of Claims 8 to 10, **characterized in that** the width of the indentation (66) is greater than the width of the recess (64) approximately by the movement path of the seal (30) between the sealing position and the initial position.

12. Sealing arrangement according to one of the preceding claims, **characterized in that**, in the direction of the end faces (14, 16) of the flanges (6, 8), the groove (24) is inclined toward a longitudinal axis (36, 38) of the fluid duct (20, 40).

13. Sealing arrangement according to one of the preceding claims, **characterized in that** the seal (30) is composed of a resiliently elastic material.

14. Sealing arrangement according to one of the preceding claims, **characterized in that** the at least one pressure relief duct is connected to a pressure monitor.

15. Sealing arrangement according to one of the preceding claims, **characterized in that** the at least one pressure relief duct is connected to a vacuum source.

16. Device for treating small objects, in particular for cleaning and sterilizing plungers or closures of syringes, infusion bottles, and vials for pharmaceutical purposes, having a container for holding a plurality of the objects, which container has at least one opening, and having at least one supply or discharge line for a treatment medium, **characterized in that** a detachable flange connection (106, 110; 108, 112; 118, 116) between the container opening (84, 88) and the supply or discharge line (98; 100; 124) comprises a sealing arrangement (10) according to one of the preceding claims.

17. Device according to Claim 16, **characterized in that** the groove (24) which can be filled with pressure fluid is arranged in the flange (106; 108; 118) of the supply or discharge line (98; 100; 124).

## Revendications

1. Agencement d'étanchéité pour des connexions bridées détachables entre deux pièces, qui entoure un canal de fluide, les deux pièces présentant des brides avec des faces frontales opposées, et l'une des deux brides étant pourvue d'une rainure périphérique et d'un joint d'étanchéité annulaire disposé dans la rainure, lequel peut être pressé contre la face frontale de l'autre bride par l'apport de fluide sous pression entre la base de rainure et le joint d'étanchéité, **caractérisé en ce que** le joint d'étanchéité (30), au niveau de son côté interne tourné vers le canal de fluide (20, 40), conjointement avec la paroi latérale adjacente (56) de la rainure (24), délimite un évidement périphérique (60) dans lequel débouche au moins un canal de décharge de pression (62) pour évacuer du fluide sous pression s'échappant devant le côté interne du joint d'étanchéité (30) dans l'évidement (60).

2. Agencement d'étanchéité selon la revendication 1, **caractérisé en ce que** le joint d'étanchéité (30) s'applique de part et d'autre de l'évidement (60) de manière hermétique contre les parois latérales opposées (56, 58) de la rainure (24).

3. Agencement d'étanchéité selon la revendication 1 ou 2, **caractérisé en ce que** le joint d'étanchéité (30) peut être déplacé à l'intérieur de la rainure (24) entre deux positions, une position d'étanchéité dans laquelle son extrémité frontale tournée vers la face frontale (16) de l'autre bride (8) est pressée contre la face frontale (16) en dépassant hors de la rainure (24), et une position de sortie dans laquelle il se trouve complètement à l'intérieur de la rainure (24).

4. Agencement d'étanchéité selon la revendication 3, **caractérisé en ce que** le joint d'étanchéité (30) peut être déplacé de la position de départ à la position d'étanchéité par l'apport de fluide sous pression entre la base de la rainure (26) et le joint d'étanchéité (30), et par application d'une dépression entre la base de la rainure (26) et le joint d'étanchéité (30), peut être déplacé de la position d'étanchéité à la position de départ.

5. Agencement d'étanchéité selon l'une quelconque des revendications précédentes, **caractérisé en ce que** le joint d'étanchéité (30) présente, dans la région de l'évidement (60), une section transversale plus petite que de part et d'autre de l'évidement (60).

6. Agencement d'étanchéité selon l'une quelconque des revendications précédentes, **caractérisé en ce que** le joint d'étanchéité (30) est pourvu au moins sur son côté interne d'un renfoncement périphérique (66).

7. Agencement d'étanchéité selon la revendication 6, **caractérisé en ce que** le joint d'étanchéité (30) est également pourvu sur son côté externe d'un renfoncement périphérique (70).

8. Agencement d'étanchéité selon l'une quelconque des revendications précédentes, **caractérisé en ce que** la paroi latérale de la rainure adjacente au côté interne du joint d'étanchéité est pourvue d'une encoche périphérique (64).

9. Agencement d'étanchéité selon la revendication 8, **caractérisé en ce que** l'au moins un canal de décharge de pression (62) débouche dans l'encoche (64).

10. Agencement d'étanchéité selon la revendication 8 ou 9, **caractérisé en ce que** le renfoncement (66) et l'encoche (64) forment conjointement l'évidement (60).

11. Agencement d'étanchéité selon l'une quelconque des revendications 8 à 10, **caractérisé en ce que** la largeur du renfoncement (66) est plus grande que la largeur de l'encoche (64) d'environ la distance de déplacement du joint d'étanchéité (30) entre la position d'étanchéité et la position de départ.

12. Agencement d'étanchéité selon l'une quelconque des revendications précédentes, **caractérisé en ce que** la rainure (24) est inclinée dans la direction des faces frontales (14, 16) des brides (6, 8) vers un axe longitudinal (36, 38) du canal de fluide (20, 40).

13. Agencement d'étanchéité selon l'une quelconque des revendications précédentes, **caractérisé en ce que** le joint d'étanchéité (30) se compose d'un matériau en caoutchouc élastomère.

14. Agencement d'étanchéité selon l'une quelconque des revendications précédentes, **caractérisé en ce que** l'au moins un canal de décharge de pression est connecté à un manostat.

15. Agencement d'étanchéité selon l'une quelconque des revendications précédentes, **caractérisé en ce que** l'au moins un canal de décharge de pression est connecté à une source de dépression.

16. Dispositif pour traiter de petits objets, notamment pour nettoyer et stériliser des pistons de seringues ou des bouchons de seringues, des bouteilles d'infusion, des flacons à usage pharmaceutique, avec un récipient pour recevoir une pluralité de ces objets, qui présente au moins une ouverture, ainsi qu'avec au moins une conduite d'amenée ou d'évacuation pour un fluide de traitement, **caractérisé en ce qu'**une connexion bridée détachable (106, 110 ; 108, 112 ; 118, 116) entre l'ouverture du récipient (84, 88) et la conduite d'amenée ou d'évacuation (98 ; 100 ; 124) comprend un agencement d'étanchéité (10) selon l'une quelconque des revendications précédentes.

17. Dispositif selon la revendication 16, **caractérisé en ce que** la rainure (24) pouvant être sollicitée avec du fluide sous pression est disposée dans la bride (106 ; 108 ; 118) de la conduite d'amenée ou d'évacuation (98 ; 100 ; 124).
